# EUROPÄISCHE PATENTSCHRIFT

(11) **EP 1 761 375 B1**
(45) Veröffentlichungstag und Bekanntmachung des Hinweises auf die Patenterteilung: **12.03.2008**
(21) Anmeldenummer: 05771921.3
(22) Anmeldetag: 23.06.2005
(51) Int. Cl.: B29C 45/76

(54) **VERFAHREN ZUM FÜLLEN VON ZUMINDEST EINER KAVITÄT**
METHOD FOR FILLING AT LEAST ONE CAVITY
PROCEDE POUR REMPLIR AU MOINS UNE CAVITE

(30) Priorität: 29.06.2004 DE 102004031546
(43) Veröffentlichungstag der Anmeldung: 14.03.2007
(73) Patentinhaber: Priamus System Technologies AG, 8200 Schaffhausen (CH)
(72) Erfinder: BADER, Christopherus, CH-8414 Neftenbach (CH); SCHILDKNECHT, Guido, CH-9500 Wil (CH)
(74) Vertreter: Weiss, Peter
(86) Internationale Anmeldenummer: PCT/EP2005/006796
(87) Internationale Veröffentlichungsnummer: WO 2006/000411

(56) Entgegenhaltungen:
- EP-A- 0 704 290
- WO-A-98/39150
- WO-A-02/081177
- DE-A1- 10 112 126
- US-A- 6 090 318
- US-A1- 2003 203 064
- PATENT ABSTRACTS OF JAPAN Bd. 2000, Nr. 24, 11. Mai 2001 (2001-05-11) -& JP 2001 179786 A (KANTO AUTO WORKS LTD), 3. Juli 2001 (2001-07-03)
- PATENT ABSTRACTS OF JAPAN Bd. 014, Nr. 251 (M-0979), 29. Mai 1990 (1990-05-29) -& JP 02 070418 A (HITACHI LTD), 9. März 1990 (1990-03-09) -& DATABASE WPI Section Ch, Week 199016 Derwent Publications Ltd., London, GB; Class A32, AN 1990-120247 XP002352949 & JP 02 070418 A (HITACHI LTD) 9. März 1990 (1990-03-09)
- "NEW CONCEPT IN RUNNERLESS VALVE GATING SLASHES 55% MOLDED-COMPONENT REJECT RATE BY TWO-THIRDS" MODERN PLASTICS INTERNATIONAL, MCGRAW-HILL,INC. LAUSANNE, CH, Bd. 13, Nr. 8, August 1983 (1983-08), Seite 80, XP001176392 ISSN: 0026-8283
- MICHAELI W ET AL: "KASKADENSPRITZGIESSEN ANALYSIERT UND MIT CADMOULD BERECHNET CASCADE INJECTION MOULDING ANALYSED AND CALCULATED USING CADMOULD" PLASTVERARBEITER, ZECHNER UND HUETHIG VERLAG GMBH. SPEYER/RHEIN, DE, Bd. 45, Nr. 11, 1. November 1994 (1994-11-01), Seite 96,98,100,102, XP000482361 ISSN: 0032-1338
- PATENT ABSTRACTS OF JAPAN Bd. 007, Nr. 261 (M-257), 19. November 1983 (1983-11-19) -& JP 58 142831 A (KOBE SEIKOSHO KK), 25. August 1983 (1983-08-25) -& DATABASE WPI Section Ch, Week 198340 Derwent Publications Ltd., London, GB; Class A32, AN 1983-779363 XP002352950 & JP 58 142831 A (KOBE STEEL LTD) 25. August 1983 (1983-08-25)

## Beschreibung

Die Erfindung betrifft ein Verfahren zum Füllen von zumindest einer Kavität eines Werkzeuges zum Herstellen eines Formteiles aus einer Schmelze, insbesondere einer Kavität eines Werkzeuges in einer Spritzgiessmaschine, wobei die Schmelze unter Druck aus Düsen durch eine Mehrzahl von Ausschnitten in die Kavität eingeführt wird, denen Sensoren zugeordnet sind, die den Schmelzestrom in der Kavität ermitteln.

### Stand der Technik

Beim Spritzgiessen oder bspw. auch beim Druckgiessen wird die Kavität in einem Werkzeug mit einer Schmelze, insbesondere aus Kunststoff, Metall oder Keramik, gefüllt. Dieser Einfüllvorgang geschieht solange bis die Kavität zumindest fast vollständig gefügt ist, danach erfolgt ein Umschalten auf die sogenannte Nachdruckphase, in der vor allem auch ein Schwinden des Werkstoffes in der Kavität ausgeglichen wird.

Aus der DE 101 12 126 A1 ist ein Verfahren zum automatischen Balancieren der volumetrischen Füllung von Kavitäten, insbesondere in Mehrfach-Spritzgiesswerkzeugen bekannt, wobei der Temperaturverlauf in den Kavitäten ermittelt und für andere Kavitäten vergleichmässigt wird.

Beispielsweise in der DE 101 16 998 A1 (WO 02108117A) wird beschrieben, wie mit Hilfe eines Werkzeugwandtemperatur-Sensors am Fliesswegeende einer Kavität automatisch detektiert wird, wann die Kunststoffschmelze diesen Punkt erreicht. In diesem Moment wird ein Signal an die Maschinensteuerung gesendet, um von einem geschwindigkeitsgeregelten Einspritzvorgang auf einen druckgesteuerten Nachdruckvorgang umzuschalten. In dieser Schrift wird auch die Problematik bei einem Einfach-Werkzeug mit Mehrfachanbindung für die Herstellung von sehr grossen Spritzteilen mit langen Fliesswegen angedeutet, die Fliessfront der Schmelze bis zur volumetrischen Füllung mit Hilfe von Sensoren in der Kavität so zu regeln, dass die Heisskanaldüsen an jedem Anspritzpunkt entsprechend der Programmierung gesteuert werden können.

Aus der JP 2001 179786 A geht ferner ein Verfahren hervor, bei dem Schmelze aus einer Düse über einen Verteiler durch zwei Anspritzpunkte in eine Kavität eingeführt wird. Dieser Kavität sind zwei Drucksensoren im Schmelzeweg zugeordnet, wobei anhand deren Signale das Öffnen und Schliessen von entsprechenden Ventilen vor den Anspritzpunkten geregelt werden.

Aus der EP 0 704 290 A geht wiederum ein Verfahren zur Herstellung von Kunststoffspritzgiessteilen hervor, bei dem Schmelze zu mehreren Anspritzpunkten über einen Verteiler geführt wird. Aus einem ersten Anspritzpunkt wird eine bestimmte Menge an Schmelze in die Kavität eingefüllt und diese durch Schliessen der Form verteilt, bis die Schmelze einen Sensor erreicht. Danach wird ein zweiter Anspritzpunkt geöffnet und wiederum ein Teil der Schmelze in die Form eingefüllt und durch weiteres Schliessen der Form verteilt, bis ein zweiter Sensor angesprochen wird.
US-A-2003/0203064 offenbart ein Verfahren gemäß dem Oberbegriff des Anspruchs 1.

Für grossflächige bzw. grossvolumige Formteile, wie bspw. Stossfänger, Türleisten, Armaturen oder ähnliches ist das sogenannte Kaskaden-Spritzgiessen bekannt. Hier wird nicht, wie im klassischen Spritzgiessverfahren über einen zentralen Anschnitt, sondern über mehrere gesteuerte Düsen sequentiell angespritzt bzw, gefüllt. Das heisst, dass zunächst über die erste Düse nur ein Teil der Werkzeugkavität gefüllt wird. Erreicht die Schmelze die Position der zweiten Düse, öffnet diese und füllt einen weiteren Teil der Kavität, usw.. Das Optimieren des Düsenöffnen erfolgt in der Regel empirisch, wobei keinertel Möglichkeit besteht, die Position der Bindenähte, d. h., das örtliche Zusammentreffen der unterschiedlichen Schmelzen, zu überprüfen. Dies beeinflusst massgebend die Qualität der hergestellten Teile.

Generell ist zu bemerken, dass sich bei diesen Anwendungen aufgrund der langen Fliesswege Schwankungen beim Füllen einer Kavität wesentlich stärker auswirken, als bei vergleichsweise kleinen Formteilen.

### Aufgabe

Der vorliegenden Erfindung liegt die Aufgabe zugrunde, den Kaskaden-Spritzgiessprozess wesentlich zu verbessern.

### Lösung der Aufgabe

Zur Lösung dieser Aufgabe führt, dass anhand der Signale der Sensoren ein kontinuierlicher Einfüllvorgang durch die Düsen anhand der Zeitdifferenz der Signale der Sensoren einer nach dem anderen automatisch aufeinander abgestimmt wird.

Das bedeutet, dass jetzt das Einschalten der Düsen nicht mehr auf empirischem Wege erfolgt, sondern aufgrund des ermittelten Schmelzeflusses. Erfindungsgemäss kann dabei jeder Parameter detektiert werden, der von der Schmelze verändert wird. Hierzu zählt einmal die Temperatur bzw. Temperaturänderungen, die von der Schmelze hervorgerufen werden. Trifft die Schmelze selbst auf einen Temperatursensor, so lässt sie dessen Temperatur sofort ansteigen, was zu einem Signal führen kann, das wiederum bedeutet, dass die Schmelze diesen Temperatursensor erreicht hat.

Heute wird jedoch nicht mehr die Schmelzetemperatur selbst gemessen, sondern bevorzugt die Werkzeugwandtemperatur, wie dies in der o. g. DE 101 12 126 A1 beschrieben ist.

Denkbar ist auch die Verwendung von Drucksensoren, da die einfliessende Schmelze den Druck in der Kavität normalerweise erhöht. Allerdings kann hierdurch die Schmelzefront nicht sehr genau ermittelt werden.

Denkbar könnten auch Sensoren sein, die auf ein bestimmtes Material der Schmelze reagieren, bspw. auf ein bestimmtes Metall. Bevorzugt werden aber nach wie vor Temperatursensoren verwendet.

Erfindungsgemäss wird nun jeder Düse ein derartiger Sensor zugeordnet, welcher detektiert, wann die Schmelze die entsprechende Position erreicht. Auf diese Weise können die einzelnen Düsen prozessabhängig, also in einem geschlossenen Regelkreis, geöffnet bzw. geschlossen werden. Hierdurch wird eine wesentliche Qualitätsverbesserung der Formteile erzielt, da nun das Auftreffen der unterschiedlichen Schmelzen ("Bindenaht") nicht mehr willkürlich geschieht, sondern gesteuert wird.

Prinzipiell besteht die Möglichkeit, die Sensoren, insbesondere die Temperatursensoren, vor den Düsen oder nach den Düsen zu positionieren. Die Positionierung der Sensoren vor den Düsen hat den Vorteil, dass das Öffnen der Düsen über eine Zeitsteuerung verzögert und gesteuert werden kann. Das Positionieren der Sensoren nach den Düsen bewirkt, dass effektiv immer nur dann geöffnet wird, wenn die Schmelze auch tatsächlich den Sensor überströmt. Dies entspricht zwar dem Idealfall, kann aber nachträglich nicht mehr beeinflusst werden.

Bevorzugt wird ein letzter Sensor am Ende des Fliesswegs platziert. Erreicht die Schmelze diesen letzten Sensor, werden sämtliche Düsen geöffnet und auf Nachdruck umgeschaltet.

Während mit dem ersten beschriebenen Verfahren das Aufeinandertreffen der verschiedenen Schmelzeströme geregelt wird, kann mit einem weiteren Verfahren die Geschwindigkeit der Schmelze zwischen zwei Anschnitten/Düsen geregelt und vereinheitlicht werden. Dies ist insofern erstrebenswert, da das Kunststoffteil nur dann die gleichen Eigenschaften hinsichtlich Schwindung und Verzug aufweist, wenn es auch unter dem gleichen Füllbedingungen hergestellt wurde.

Erfindungsgemäss werden jetzt die Werkzeugwand-Temperaturen in der Nähe dieser Düse gemessen, analysiert und ggf. geregelt, so dass die Schmelze bei einer unveränderten Maschineneinstellung die Strecke zwischen zwei Heisskanaldüsen bzw. zwei Sensorpositionen immer in der gleichen Zeit zurücklegt. Die Fliessgeschwindigkeit der Schmelze wird bevorzugt dadurch verändert, dass die Viskosität der Schmelze verändert wird. Bevorzugt geschieht dies dadurch, dass die Schmelze an den Anschnitten/Düsen unterschiedlich temperiert wird. Selbstverständlich ist auch die Zugabe von Schmelze unterschiedlicher Viskosität möglich, bedeutet aber einen erheblichen Aufwand.

Somit muss jeder Abschnitt zwischen zwei Heisskänaldüsen im Hinblick auf eine eigenständige Regelung betrachtet werden.

Die Praxis hat jedoch gezeigt, dass es nicht ausreicht, die Schmelzefrontgeschwindigkeit zwischen zwei Heisskanaldüsen individuell zu vereinheitlichen, sondern dass eine Abhängigkeit zwischen den einzelnen Abschnitten besteht. Hier ist allerdings ein Einkavitätenwerkzeug von einem Mehrkavitätenwerkzeug zu unterscheiden.

Im einfachen Fall eines Einkavitätenwerkzeuges, z. B. für einen Stossfänger, werden die Füllphasen der einzelnen Abschnitte zunächst optimiert. Dies erfolgt durch das optimierte Öffnen und Schliessen der Verschlussdüsen entweder automatisch mit Hilfe des oben erwähnten Verfahrens oder empirisch. Nach der Optimierung werden die in der Nähe der Heisskanaldüsen gemessenen Temperaturen als Referenzkurven abgespeichert.

Verändert sich nun das Fliessverhalten der Schmelze während der Produktion aufgrund äusserer Einflüsse, schaukelt sich dieses Verhalten vom ersten Anschnitt bis zum Fliesswegende auf. Das heisst, der zeitliche Unterschied zwischen der Referenzkurve und der aktuellen Temperaturkurve wird immer grösser, je weiter in Richtung Fliesswegeende gemessen wird.

Im Falle eines Mehrkavitätenwerkzeuges, z. B. bei der Herstellung von zwei identischen Seitenleisten eines Fahrzeuges im gleichen Werkzeug, ist es nicht das Ziel, jedes einzelne Teil gegenüber einem Referenzsignal zu regeln, sondern im Vergleich zueinander. Das heisst, dass der Schmelzefluss in beiden Teilen vereinheitlicht werden muss, so dass sich die Schmelze zu jedem Zeitpunkt im gleichen Abstand zu dem jeweiligen Anschnitt befindet.

Da in diesem Fall zwei Messkurven miteinander verglichen oder vereinheitlicht werden, wird im Fall eines zeitlich versetzten Signalanstiegs ein Referenzpunkt zwischen den beiden Kurven ermittelt, der als Bezugspunkt für die Regelung verwendet wird. Anstatt eines Referenzpunktes könnte prinzipiell auch eine Referenzkurve ermittelt werden, der Einfachheit halber wird jedoch ein Referenzpunkt gewählt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische und schematische Ansicht eines grossflächigen Formteils mit zugehörigen Angiesspunkten und Sensoren;
Figur 2 eine diagrammartige Darstellung der Steuerung von Einspritzdüsen;
Figur 3 diagrammartige Darstellungen eines erfindungsgemässen Regelverfahrens;
Figur 4 diagrammartige Darstellungen eines weiteren erfindungsgemässen Regelverfahrens.

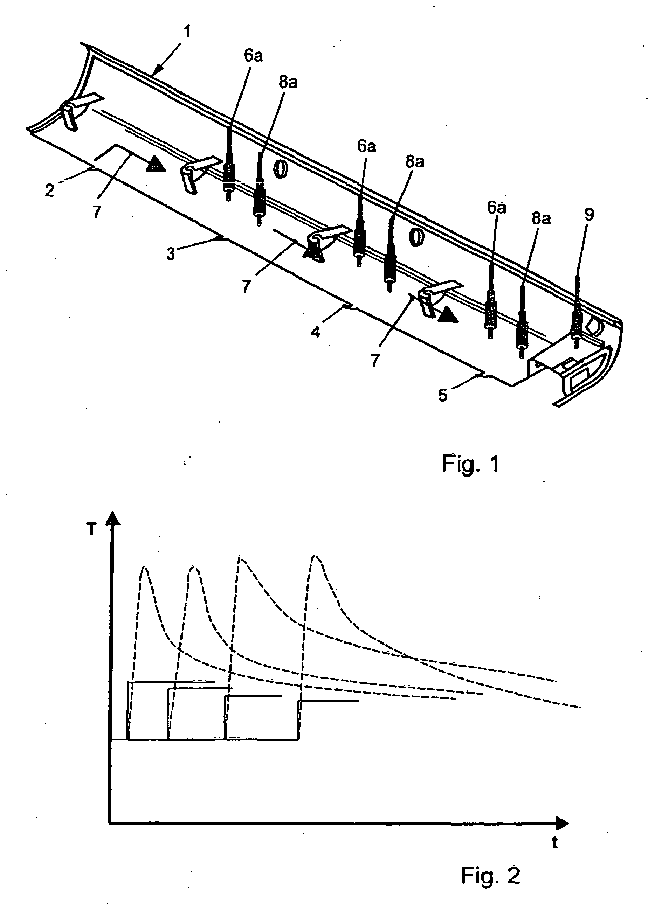

In Figur 1 ist perspektivisch ein grossflächiges Formteil 1 dargestellt, welches in einer Kavität eines Spritzgiesswerkzeuges hergestellt wird. Es sind vier Anschnitte 2 bis 5 angedeutet, an denen Schmelze in die Kavität eingefüllt wird. Ferner sind Sensoren 6a gezeigt, die in Schmelzerichtung, die durch die Pfeile 7 gekennzeichnet ist, vor den entsprechenden Düsen bei den Anschnitten 2 bis 5 angeordnet sind. Mit der Bezugzahl 8a sind dagegen Sensoren gekennzeichnet, die nach dem Anschnitt bzw. der entsprechenden Düsen in Schmelzerichtung angeordnet sind.

Ein letzter Sensor 9 ist nahe dem Ende des Fliessweges der Schmelze vorgesehen.

Die Funktionsweise der vorliegenden Erfindung ist folgende:

Eine Schmelze wird über eine nicht näher gezeigte Düse dem ersten Anschnitt 2 zugeführt. Sie fliesst in Fliessrichtung 7 und erreicht den ersten, dem Anschnitt 3 vorgeschalteten Temperatursensor 6a. Dieser Sensor sendet ein Signal an die Maschinensteuerung, welche den Einspritzvorgang über die Düse am Anschnitt 3 einleitet. Wiederum fliesst die Schmelze in Schmelzerichtung 7 Richtung Anschnitt 4 und erreicht dort den nächsten vorgelagerten Temperatursensor 6a. Dieser gibt wiederum ein Signal an die Maschinensteuerung ab, die nunmehr Schmelze über die Düse am Anschnitt 4 in die Kavität einfüllen lässt. Auch diese Schmelze fliesst in Schmetzerichtung 7 zum nächsten Sensor 6a, welcher dem Anschnitt 5 vorgelagert ist. Dieser Sensor 6a gibt wiederum ein Signal an die Maschinensteuerung, wodurch über den Anschnitt 5 Schmelze in die Kavität eingeleitet wird. Diese Schmelze fliesst Richtung Ende der Kavität. Kurz vor Ende des Fliessweges stellt der Sensor 9 das Ankommen der Schmelze fest und schaltet nun sämtliche Düsen an den Anschnitten 2 bis 5 auf Nachdrücken um.

Es besteht auch die Möglichkeit, die Sensoren den Anschnitten 3, 4 und 5 nachzuschalten, wie dies durch die Sensoren 8a angedeutet ist. Die Positionierung der Sensoren 8a nach den Düsen bewirkt, dass effektiv immer nur dann geöffnet wird, wenn die Schmelze auch tatsächlich den Sensor überströmt. Dies entspricht zwar einem Idealfall, jedoch kann die Schmelze nicht mehr nachträglich beeinflusst werden, wie dies durch das Vorpositionieren der Sensoren 6a möglich ist. Diese haben den Vorteil, dass das Öffnen der Düse über eine Zeitsteuerung verzögert und gesteuert werden kann.

In Figur 2 ist strichpunktiert das Messsignal des Temperatursensors über der Zeit aufgetragen. Die durchgezogenen Linien zeigen das Schaltsignal "Düsen öffnen/schliessen".

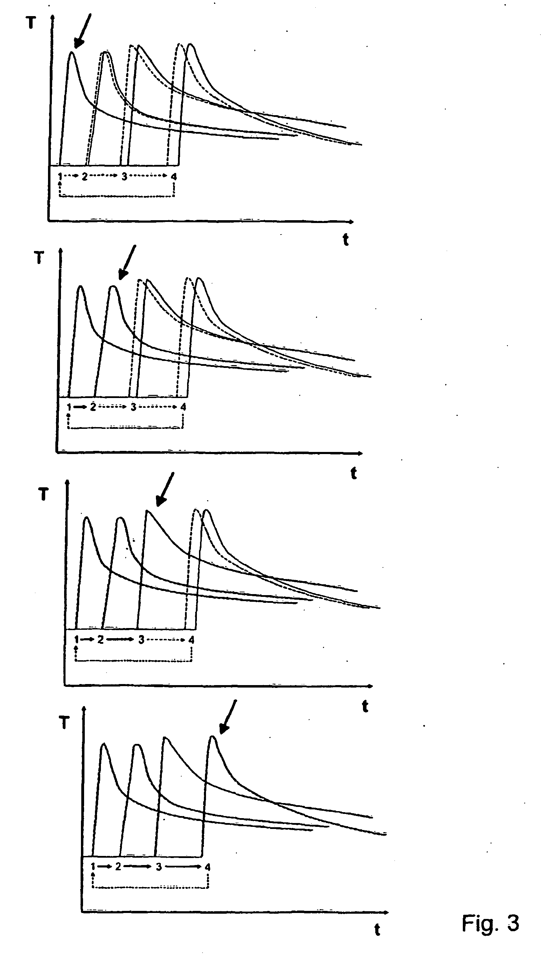

Ein wesentliches Merkmal der vorliegenden Erfindung bezieht sich auf das Regelverfahren der Schmelzezufuhr. In Figur 3 ist erkennbar, dass nur beim ersten Temperatursensor ein Referenzwert, der gestrichelt dargestellt ist, mit dem Messsignal übereinstimmt. Bei den nachfolgenden Temperatursensoren 2, 3 und 4 weicht der Referenzwert mehr oder weniger von dem Messsignal ab.

Erfindungsgemäss wird jetzt ein Temperatursensor nach dem anderen geregelt, bis Referenz und Messwert oder Messsignal übereinstimmen. Das heisst, zuerst erfolgt eine Regelung am zweiten Temperatursensor, dann am dritten Temperatursensor und dann am vierten Temperatursensor. Dann beginnt die Regelung wieder von vorne.

Falls der Zeitabstand zwischen allen Referenzen und Messsignalen kleiner ist als ein bestimmtes Δ t, erfolgt keine weitere Regelung. Falls irgendeine Zeitdifferenz dieses Δ t übersteigt, wird dieses sofort nachgeregelt. Hierbei ist es massgebend, dass die einzelnen Abschnitte immer wieder in der gleichen Reihenfolge überprüft werden. Die Anzahl der regelten Abschnitte ist beliebig je nach Anzahl der Düsen.

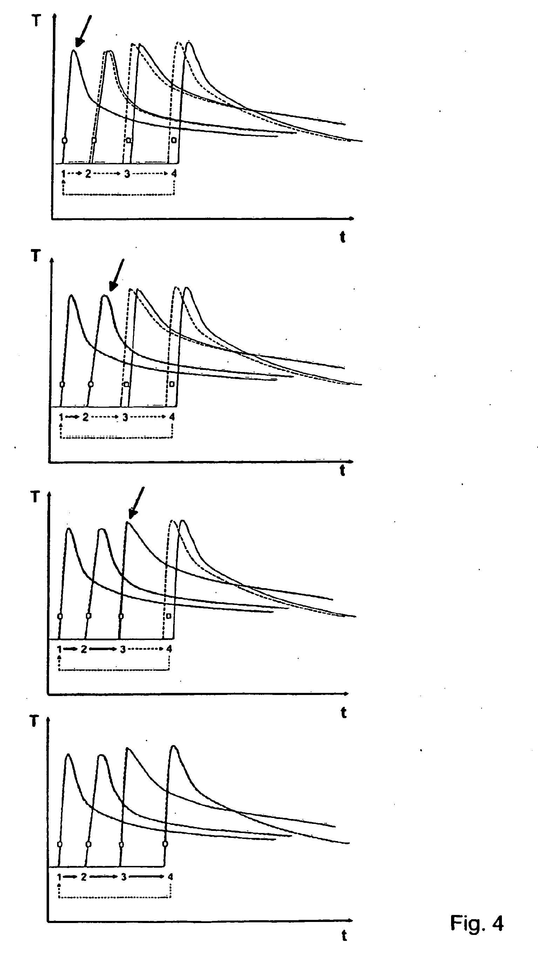

In Figur 4 wird eine Regelung für ein Mehrkavitätenwerkzeug gezeigt. Bei einem Mehrkavitätenwerkzeug werden erfindungsgemäss die Messkurven der gleichen Anschnitte miteinander verglichen und vereinheitlicht. Im Falle eines zeitlich versetzten Signalanstieges, wie dies durch gestrichelt dargestellten Messsignale des ersten Teils und die durchgezogen dargestellten Messsignale des zweiten Teils angedeutet sind, wird ein Referenzpunkt 10 zwischen den beiden Kurven ermittelt, der als Bezugpunkt für die Regelung verändert wird. Anstatt eines Referenzpunktes könnte prinzipiell auch eine Referenzkurve ermittelt werden, der Einfachheit halber wird jedoch ein Referenzpunkt verwendet.

Auch hier erfolgt eine Regelung zwischen dem ersten Anschnitt und dem zweiten Anschnitt, bis beide Messkurven übereinstimmen. Danach erfolgt eine Regelung zwischen dem zweiten und dem dritten Anschnitt und danach eine Regelung zwischen dem dritten und vierten Anschnitt, schlussendlich eine Regelung zwischen dem vierten Anschnitt und dem Fliesswegeende bis alle Messkurven übereinstimmen.

Falls der Zeitabstand zwischen den Messkurven kleiner ist als ein bestimmtes Δ t, erfolgt keine weitere Regelung. Falls irgendeine Zeitdifferenz dieses Δ t übersteigt, wird diese sofort nachgeregelt. Hierbei ist es massgebend, dass die einzelnen Abschnitte immer wieder in der gleichen Reihenfolge überprüft werden. Die Anzahl der geregelten Anschnitte ist beliebig je nach Anzahl Heizkanaldüsen.

### Positionszahlenliste

| | | | | | |
|---|---|---|---|---|---|
| 1 | Formteil | 34 | | 67 | |
| 2 | Anschnitte | 35 | | 68 | |
| 3 | Anschnitte | 36 | | 69 | |
| 4 | Anschnitte | 37 | | 70 | |
| 5 | Anschnitte | 38 | | 71 | |
| 6 | Sensoren | 39 | | 72 | |
| 7 | Schmelzerichtung | 40 | | 73 | |
| 8 | Sensoren | 41 | | 74 | |
| 9 | Sensor | 42 | | 75 | |
| 10 | Referenzpunkt | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Füllen von zumindest einer Kavität eines Werkzeuges zum Herstellen eines Formteiles aus einer Schmelze, insbesondere einer Kavität eines Werkzeuges in einer Spritzgiessmaschine, wobei die Schmelze unter Druck aus Düsen durch eine Mehrzahl von Anschnitten (2 bis 5) in die Kavität eingeführt wird, denen Sensoren (6a, 8a) zugeordnet sind, die den Schmelzestrom in der Kavität ermitteln,
**dadurch gekennzeichnet,**
**dass** anhand der Signale der Sensoren (6a, 8a) ein kontinuierlicher Einfüllvorgang durch die Düsen anhand der Zeitdifferenz der Signale der Sensoren (6a, 8a) einer nach dem anderen automatisch aufeinander abgestimmt wird.

2. Verfahren nach Anspruch 1, **dadurch gekennzeichnet, dass** der Sensor (6a, 8a) eine Werkzeugwandtemperatur, Schmelzetemperatur, einen Druck und/oder das Material der Schmelze ermittelt.

3. Verfahren nach Anspruch 1 oder 2, **dadurch gekennzeichnet, dass** der Sensor (6a, 8a) dann seine ihm zugehörige Düse anspricht, wenn er erkennt, dass die Schmelze einen vorbestimmten Punkt in der Kavität erreicht hat.

4. Verfahren nach einem der Ansprüche 1 bis 3, **dadurch gekennzeichnet, dass** der Sensor (6a, 8a) bezüglich des Schmelzeweges vor der Düse angeordnet ist.

5. Verfahren nach wenigstens einem der Ansprüche 1 bis 4, **dadurch gekennzeichnet, dass** ein Ende des Fliessweges der Schmelze in der Kavität durch einen Sensor (6a, 8a) bestimmt wird und bevorzugt sämtliche Düsen auf Nachdruck umgeschaltet werden.

6. Verfahren nach wenigstens einem der Ansprüche 1 bis 5, **dadurch gekennzeichnet, dass** die Fliessgeschwindigkeit der Schmelze ermittelt und vergleichmässigt wird.

7. Verfahren nach Anspruch 6, **dadurch gekennzeichnet, dass** die Viskosität der Schmelze zur Vergleichmässigung der Fliessgeschwindigkeit verändert wird.

8. Verfahren nach Anspruch 6 oder 7, **dadurch gekennzeichnet, dass** die Schmelze vor bzw. in den Düsen zur Änderung ihrer Viskosität unterschiedlich temperiert wird.

9. Verfahren nach wenigstens einem der Ansprüche 1 bis 8, **dadurch gekennzeichnet, dass** die Tätigkeit der Düsen und/oder die Viskosität der Schmelze in Fliessrichtung der Schmelze aufeinander abgestimmt wird.

10. Verfahren nach wenigstens einem der Ansprüche 1 bis 9, **dadurch gekennzeichnet, dass** in einem Mehrkavitätenwerkzeug nach Optimierung abgespeicherte Referenzkurven im Vergleich zueinander vereinheitlicht werden.

11. Verfahren nach Anspruch 10, **dadurch gekennzeichnet, dass** zumindest ein/e Referenzpunkt oder -kurve zwischen den zu vergleichenden Referenzsignalen ermittelt und als Bezugspunkt für die Regelung verwendet wird.

## Claims

1. Method of filling at least one cavity of a mould for manufacturing a moulded part from a melt, in particular a cavity of a mould in an injection moulding machine, wherein the melt is introduced under pressure from nozzles into the cavity through a plurality of gates (2 to 5), associated with which are sensors (6a, 8a) that determine the melt flow in the cavity,
**characterized in**
**that** by means of the signals of the sensors (6a, 8a) a continuous filling operation through the nozzles is automatically tuned to one another by means of the time difference of the signals of the sensors (6a, 8a) one after the other.

2. Method according to claim 1, **characterized in that** the sensor (6a, 8a) determines a mould wall temperature, melt temperature, a pressure and/or the material of the melt.

3. Method according to claim 1 or 2. **characterized in that** the sensor (6a, 8a) operates its associated nozzle when it detects that the melt has reached a predetermined point in the cavity.

4. Method according to one of claims 1 to 3, **characterized in that** the sensor (6a, 8a) is disposed, in relation to the melt path, upstream of the nozzle.

5. Method according to at least one of claims 1 to 4, **characterized in that** an end of the flow path of the melt in the cavity is determined by means of a sensor (6a, 8a) and preferably all nozzles are switched over to holding pressure.

6. Method according to at least one of claims 1 to 5, **characterized in that** the flow rate of the melt is determined and evened out.

7. Method according to claim 6, **characterized in that** the viscosity of the melt is varied in order to even out the flow rate.

8. Method according to claim 6 or 7, **characterized in that** the melt upstream of and/or in the nozzles is subjected to different temperature control in order to vary its viscosity.

9. Method according to at least one of claims 1 to 8, **characterized in that** the activity of the nozzles and/or the viscosity of the melt is tuned to one another in flow direction of the melt.

10. Method according to at least one of claims 1 to 9, **characterized in that** in a multi-cavity mould reference curves stored after optimization are standardized in comparison to one another.

11. Method according to claim 10, **characterized in that** at least one reference point or reference curve is determined between the reference signal that are to be compared and is used as a reference point for the closed-loop control.

## Revendications

1. Procédé pour remplir au moins une cavité d'un moule pour la fabrication d'une pièce moulée à partir d'un matériau en fusion, en particulier une cavité d'un moule dans une machine à mouler par injection, le matériau en fusion étant introduit sous pression à partir de tuyères, à travers une pluralité d'entrées (2 à 5), dans la cavité, auxquelles sont associés des capteurs (6a, 8a) qui déterminent le flux de matériau en fusion dans la cavité,
**caractérisé par le fait que**
à l'aide des signaux des capteurs (6a, 8a), une opération de remplissage en continu à travers les tuyères est réglée automatiquement sur base des différences de temps entre les signaux des capteurs (6a, 8a) l'un après l'autre.

2. Procédé selon la revendication 1, **caractérisé par le fait que** le capteur (6a, 8a) détermine une température de paroi de moule, une température de matériau en fusion, une pression et/ou la matière du matériau en fusion.

3. Procédé selon la revendication 1 ou 2, **caractérisé par le fait que** le capteur (6a, 8a) adresse la tuyère lui associée lorsqu'il identifie que le matériau en fusion a atteint un point prédéterminé dans la cavité.

4. Procédé selon l'une des revendications 1 à 3, **caractérisé par le fait que** le capteur (6a, 8a) est, par rapport au trajet du matériau en fusion, disposé avant la tuyère.

5. Procédé selon au moins l'une des revendications 1 bis 4, **caractérisé par le fait qu'**une extrémité du trajet d'écoulement du matériau en fusion dans la cavité est déterminée par un capteur (6a, 8a) et que, de préférence, toutes les tuyères sont commutées à la compression finale.

6. Procédé selon au moins l'une des revendications 1 bis 5, **caractérisé par le fait que** la vitesse d'écoulement du matériau en fusion est déterminée et uniformisée.

7. Procédé selon la revendication 6, **caractérisé par le fait que** la viscosité du matériau en fusion est modifiée en vue d'uniformiser la vitesse d'écoulement.

8. Procédé selon la revendication 6 ou 7, **caractérisé par le fait que** le matériau en fusion est thermostatisé de manière différente avant ou dans les tuyères pour modifier sa viscosité.

9. Procédé selon au moins l'une des revendications 1 bis 8, **caractérisé par le fait que** l'activité des tuyères et/ou la viscosité du matériau en fusion sont accordées l'une sur l'autre dans la direction d'écoulement du matériau en fusion.

10. Procédé selon au moins l'une des revendications 1 bis 9, **caractérisé par le fait que**, dans un moule à cavités multiples, les courbes de référence mémorisées après optimisation sont uniformisées entre elles.

11. Procédé selon la revendication 10, **caractérisé par le fait qu'**au moins un point ou courbe de référence entre les signaux de référence à comparer est déterminé et utilisé comme point de référence pour la régulation.
